# EUROPEAN PATENT SPECIFICATION

(11) **EP 0 497 900 B1**
(45) Date of publication and mention of the grant of the patent: **15.11.1995**
(21) Application number: 90917191.0
(22) Date of filing: 29.10.1990
(51) Int. Cl.: C08L 23/06, C08L 23/08, C08L 23/18, D04H 3/03

(54) **THERMALLY BONDABLE FABRICS, PREPARATION AND USE**
WÄRMEVERBINDBARE GEWEBE, IHRE HERSTELLUNG UND VERWENDUNG
TISSUS POUVANT ETRE LIES THERMIQUEMENT, PREPARATION ET EMPLOI

(30) Priority: 27.10.1989 US 428280
(43) Date of publication of application: 12.08.1992
(73) Proprietor: THE DOW CHEMICAL COMPANY, Midland, Michigan 48640 (US)
(72) Inventor: KRUPP, Stephen, P., Houston, TX 77059 (US); BIESER, John, O., Lake Jackson, TX 77566 (US); KNICKERBOCKER, Edward, N., Lake Jackson, TX 77566 (US)
(74) Representative: Smulders, Theodorus A.H.J., Ir.
(86) International application number: PCT/US90/06267
(87) International publication number: WO 91/06600

(56) References cited:
- EP-A- 0 154 197
- JP-A- 5 759 943
- US-A- 3 914 342
- US-A- 4 438 238
- US-A- 4 461 873
- US-A- 4 584 347
- US-A- 4 644 045
- US-A- 4 705 829
- US-A- 4 842 922

## Description

Improvements are made in the making of staple fibers and fibrous products from linear ethylene polymer by melt spinning a blend comprising at least one high molecular weight linear ethylene polymer having a melt index less than 25 grams/10 minutes and at least one low molecular weight linear ethylene polymer having a melt index greater than 25 grams/10 minutes at blend ratios sufficient to form linear ethylene polymer staple fibers having a "Q" value above 4.5 and/or a melt index ratio I₁₀/I₂ of at least 7.0.

Linear low density polyethylene (LLDPE) is an ethylene polymer prepared using a coordination catalyst in the same manner used in preparing linear high density polyethylene (HDPE), and is actually a copolymer of ethylene and at least one higher alpha-olefin. The expression "linear ethylene polymers" includes those linear ethylene polymers which have from 0 percent to about 30 percent of at least one higher alpha-olefin of 3 to 12 carbon atoms copolymerized with the ethylene.

According to Modern Plastics Encyclopedia, as defined today, linear high density polyethylene generally has a density in the range of about 0.941 grams/cm³ to about 0.965 grams/cm³. Skilled artisans realize that the density can vary in accordance with the reaction conditions and type of catalyst used. It is also known that densities a little above that range can be achieved by special techniques, such as by annealing the polymer. It is known that polymerization conditions which will produce a homopolymer having a density of about 0.965 grams/cm³ will produce a copolymer of ethylene and higher alpha-olefin having a density lower than the said 0.965 grams/cm³, the extent of the lowering of the density being directly related with the amount of the higher alpha-olefin used.

It is known from EP-A-0 154 197 (U.S. Patent 4,830,907) that linear low density polyethylene (LLDPE) can be made into fibers by melt-spinning and that even very fine fibers can be produced.

Whereas LLDPE has been introduced in the market place as a polymer suitable for making fibers, it is also known that not all versions and varieties of LLDPE are entirely adequate for commercial production of staple fibers. In particular, the fabric strength of carded staple-based fabrics has generally been significantly less than fabrics made from carded staple-based polypropylene fibers.

It is recognized in the art of making LLDPE polymers that the density of the LLDPE is affected by the amount and kind of olefin comonomer which is copolymerized with the ethylene and, to some extent, by the process conditions and catalyst used. A given mole percent of, e.g., propylene in the copolymer will reduce the density of the polyethylene less than the same mole percent of a higher olefin comonomer. The melt index or MI (sometimes called melt flow rate or MFR) as measured by ASTM D-1238 (E) conditions 190°C/2.16 kg, is also affected to some degree by the kind and amount of olefin comonomer in the copolymer, and is also affected to some extent by the coordination catalyst used, the polymerization conditions, and/or by any telogens or chain regulators or other reactants which may be present during polymerization.

It is also recognized in the art that there are important distinctions between linear polyethylenes (which includes LLDPE polymers), and branched-chain ethylene polymers, which are made using a free-radical catalyst and are generally referred to as LDPE (low density polyethylene), and were also known in the past as ICI-type polyethylene and as HPPE (high pressure polyethylene). Our invention deals with linear polyethylenes.

U.K. Patent Application GB 2,121,423A teaches away from our invention claimed hereinafter, because the U.K. patent application teaches away from the use of "linear" polyethylene staple fibers having polymer "Q" values of more than 4 in order to prepare strong, thermally bonded fabrics, for the following reasons. In particular, the patent application relates to hot-melt adhesive binder fibers comprising specific polyethylene resin compositions. Its Example 1 discloses cut short fibers of linear polyethylene homofilaments wherein the polyethylene has a density of 0.92; an MI of 25; and a "Q" value of "2.82". It also discloses the use of those homofilaments (having a Q value of 2.82) in preparing hot-calendered non-woven fabrics from blends of such fibers with poly(ethylene terephthalate) staple fibers.

Its Claim 1 is as follows: "1. Hot-melt adhesive fibers comprising a polyethylene resin composition (C) alone, cinsisting of 50 to 100 percent by weight of a polyethylene (A) having a density of 0.910 to 0.940 grams/cm³ and a Q value $\text{(Q=Mw/Mn)}$ of 4.0 or less and 50 to 0 percent by weight of a polyethylene (B) having a density of 0.910 to 0.930 grams/cm³ and a Q value of 7.0 or more based on said composition, or composite fibers which contain said composition (C) as one of the composite components of said composite fibers and in which said composition (C) forms continuously at least a part of the fiber surface of said composite fibers."

Polyethylene B, however, is not a "linear" ethylene polymer. Polyethylene A is a linear ethylene polymer. However, when the polyethylene resin composition (C) consists of 100 percent polyethylene (A), the claim expressly requires that the Q value be "4.0 or less". Further, the British patent application teaches that one advantage of the claimed invention (when used as a binder fiber) is "superior strength" of the non-woven fabric. Accordingly, it clearly teaches away from the invention described hereinafter.

US-A-4,644,045 also teaches a way from the present invention. This patent discloses a method for preparing spunbonded fabric using an extrusion temperature of between 185 and 215°C from LLDPE having specific properties. In this publication it is admitted that "as is the case for all polymers used for melt spinning, the properties of the LLDPE (...) should not vary substantially throughout the lot". This citation states the common understanding of melt spinning polymers: the polymer should not vary. This means that the polymer molecular weight distribution of the LLDPE used in US-A-4,644,045 will be fairly narrow. Further, it is stated in this document that the breadth of the melting peak of the LLDPE used to make the spunbonded webs is narrow.

European Patent Application No. 0 314 151 (A2) published May 3, 1989 relates to polymers used in making thermally bonded fabrics, but has no working examples directed to discontinuous staple fibers. All the working examples of invention of the European patent application are directed to the use of "continuous" filaments prepared by melt-spinning at linear spinning velocities of at least 3,500 meters/minute. Its teachings are, therefore, much less relevant than the aforementioned U.K. patent application.

We have now found that blends, either discrete blends or in-situ polymerized blends, of linear ethylene polymers especially LLDPE, having certain properties, are surprisingly well suited for making staple fibers and yield products having strengths more competitive with those attainable in carded, thermally bonded webs of polypropylene. These blends have a broader molecular weight distribution than a sole linear ethylene polymer resin produced at the same MI (melt index).

A first broad aspect of the invention is a process for preparing a fabric, which fabric is either thermally bonded or bondable, from filaments including thermoplastic fine denier discontinuous staple fibers having an average denier per filament (d.p.f) in a range of from 0.1 to 15 d.p.f. and having filament lengths up to 30 cm, and in which the staple fibers are prepared from a meltspun blend of linear ethylene polymers characterized in that the polymer blend in the staple fibers has a Q value above 4.5, wherein Q is defined as weight average molecular weight divided by number average molecular weight, as determined by gel permeation chromatography, and/or an I₁₀/I₂ value of at least 7, wherein I₁₀ is determined by ASTM D-1238(N) conditions, and I₂ is determined by ASTM D-1238(E) conditions.

A second broad aspect of the invention is a thermally bonded fabric prepared by the above-described process, wherein the thermally bonded fabric has a normalized strip tensile strength of at least 3,000 grams.

A third broad aspect of the invention is polymeric fibers including discontinuous staple fibers suitable for use in the above-described process wherein the polymer has an I₁₀/I₂ value of at least 7 and the polymer is a blend of (A) at least one high molecular weight linear ethylene polymer having a MI value less than 25 grams/10 minutes and a density above 0.91 grams/cm³, and (B) at least one low molecular weight linear ethylene polymer having a MI above 25 grams/10 minutes and a density above 0.91 grams/cm³.

A fourth broad aspect of the invention is a staple fiber having a broad thermal bonding window prepared from molten linear ethylene polymer, wherein said polymer is meltspun at commercially feasible throughput rates, optionally followed by mechanical drawing, to produce fiber sizes of from 0.1 to 15 denier/filament, said polymer characterized as a blend of linear polyethylenes comprising
(A) at least one high molecular weight linear ethylene polymer having an MI measured in accordance with ASTM D-1238(E) (190°C/2.16 kg) less than 25 grams/10 minutes and a density above 0.91 grams/cm³, and
(B) at least one low molecular weight linear ethylene polymer having an MI measured in accordance with ASTM D-1238(E) (190°C/2.16 kg) greater than 25 grams/10 minutes and a density above 0.91 grams/cm³ forming linear ethylene polymer staple fibers having a Q value above 4.5, wherein Q is defined as weight average molecular weight divided by number average molecular weight, as determined by gel permeation chromatography.

A fifth broad aspect of the invention is a process for preparing polymeric fibers characterized by the steps of (A) Melt-spinning the polymer into meltspun filaments: (B) Hauling off the meltspun filaments at a speed in a range of from 60 to 2,000 meters/minute; and, optionally, (C) drawing and/or crimping and/or cutting the hauled-off meltspun filaments by conventional means.

A sixth broad aspect of the invention a process wherein molten linear ethylene polymer fine denier staple fibers are spun at commercially feasible throughput rates, optionally followed by mechanical drawing to produce fiber sizes of from 0.1 to 15 denier/filament and used in making a web or fabric, characterized by spinning a blend comprising (A) at least one high molecular weight linear ethylene polymer having a MI measured in accordance with ASTM D-1238(E) (190°C/2.16 kg) less than 25 grams/10 minutes and a density above 0.91 grams/cm³, and (B) at least one low molecular weight linear ethylene polymer having a MI measured in accordance with ASTM D-1238(E) (190°C/2.16 kg) greater than 25 grams/10 minutes and a density above 0.91 grams/cm³, forming linear ethylene polymer staple fibers having a Q value above 4.5, wherein Q is defined as weight average molecular weight divided by number average molecular weight, as determined by gel permeation chromatography.

In still another aspect, the invention is a method for increasing the thermal bonding window of staple fibers made from linear polyethylene by blending high and low molecular weight linear polyethylenes, to form a blend having a Q value above 4.5, and an I₁₀/I₂ value above 7, wherein the Q value, I₁₀ and I₂ are defined as hereinabove, spinning into staple fibers and thermally bonding into fabric.

Preferred aspects of the invention include the following.

The average denier per filament of the fiber is in a range from 1 to 15 d.p.f ., and preferably in a range from 2 to 6 d.p.f. The use of d.p.f.'s below 1 makes silk-like products, but adversely affects productivity and tends to increase downstream problems such as poor cardability.

Q value is preferably in a range from 5.5 to 10.

I₁₀/I₂ value (ratio) is preferably in a range from 10 to 20.

The polymer blend is usually, preferably formed by blending in situ during polymerization of the polymer. However, it is sometimes preferred to blend discrete polymers.

The thermally bonded fabric preferably has a normalized strip tensile strength of at least 3,000 grams; more preferably at least 3,600 grams; and most preferably at least 3,700 grams.

The polymer blend preferably has a density in a range from 0.94 to 0.96 grams/cm³.

It is preferred that at least one of the linear ethylene polymers comprise a copolymer of ethylene with at least one C₃-C₁₂ olefin (particularly octene, especially octene-1).

It is preferred to use haul-off speeds in a range of 60 to 2,000 meters/minute during the melt spinning step.

It is preferred and that at least one of the linear ethylene polymers by LLDPE.

Polymer blends of our invention wherein a high molecular weight linear polyethylene, especially LLDPE, and a low molecular weight linear polyethylene, especially LLDPE, are uniformly blended and used in making fibers, are found to exhibit not only the good hand, softness, and drape which one might expect of a linear polyethylene, especially the LLDPE variety, but a carded, thermally bonded web (fabric) of surprisingly high strength is produced at spinning rates which are very suitable for commercial operations.

In the presently claimed invention, the important thing is to blend an appropriate amount of the low molecular weight linear polymer with the high molecular weight polymer to produce the improvement in making staple fibers from the high molecular weight polymers. We have found that in obtaining the desired improvement, the blends which are preferred will have a blend density of above 0.91 gm/cm³, especially above 0.94 gm/cm³ and up to 0.96 gm/cm³.

The types of "fabric" that may be prepared by our invention are essentially all types of fabric now made and new types of fabric that could be made in the future. Our invention is primarily directed towards textile fabrics. It does extend to industrial fabrics as industrial filter cloth.

In this disclosure the expression "discrete blends" is in reference to the mixing of linear polymers which are made separate from each other, each under its own set of reaction conditions, possibly at different times and/or places, the mixing taking place after the polymer has been collected from the respective reactors.

The expression "in-situ polymerized reactor blends" is in reference to blends of at least two linear polymers which have differing properties and which are prepared conjointly, but under differing reaction conditions, whereby the properties of each are varied, one from another, and the so-prepared polymers are immediately and intimately mixed within the reaction system before removal therefrom. There are several ways known by skilled artisans for making in-situ polymerized blends, such as in U. S. Patent 3,914,342, and the invention is not limited to any one of the methods.

The linear ethylene polymer resin used for the "high molecular" weight portion of the blend of the present invention can be any which may contain an amount of a C₃ to C₁₂ olefin comonomer, copolymerized with the ethylene, sufficient to yield a density in the range of 0.91 gm/cm³ to 0.965 gm/cm³, and has a MI of less than 25 gm/10 minutes, preferably less than 20 gm/10 minutes. Preferably, the comonomer is a C₃ to C₈ olefin, such as propylene, butene-1, hexene-1, 4-methyl pentene-1, octene-1, and the like, especially octene-1, and can be a mixture of olefins such as butene/octene or hexene/octene. The above stated MI and density ranges include linear polyethylenes which contain no comonomer as well as those which contain at least one comonomer.

The linear ethylene polymer resin used for the "low molecular" weight portion of the present blend can be any which contains an amount of C₃ to C₁₂ olefin comonomer: copolymerized with the ethylene, sufficient to yield a density in the range of 0.91 gm/cm³ to 0.965 gm/cm³, and has a MI of greater than 25 gm/10 minutes preferably greater than 40 gm/10 minutes. Preferably, the comonomer is a C₃ to C₈ olefin, such as propylene, butene-1, hexene-1, 4-methyl pentene-1, octene-1 or the like, especially octene-1, and can be a mixture of olefins such as butene/octene or hexene/octene. The above stated MI and density ranges also apply to linear polyethylenes which contain no comonomer as well as those which contain at least one comonomer.

The melt index (MI), also known as I₂, of the polymers is measured in accordance with ASTM D-1238 using Condition E (also known as 190°C/2.16 kg) unless otherwise specified and is a measurement of the amount (grams) of melted polymer which is extruded from the orifice of the melt index barrel in 10 minutes. The melt index (MI) is an indication of relative molecular weight, with a given MI numerical value indicating a higher molecular weight than a greater MI numerical value.

"Gel permeation chromatography" (herein called "GPC"), also known as "size exclusion chromatography", is a measurement made to characterize molecular weight distribution of a polymer and is well known in the industry. Data reported by this GPC technique includes weight average molecular weight (MW_{wa}), number average molecular weight (MWₙₐ), and weight average molecular weight divided by number average molecular weight (MW_{wa}/MWₙₐ). Of these, the MW_{wa}/MWₙₐ is of the most interest, indicating broadness of molecular weight distribution. The higher the MW_{wa}/MWₙₐ ratio, the broader the molecular weight distribution (sometimes called polydispersity) of the resin. Molecular weight distribution, indicated by MW_{wa}/MWₙₐ, or "Q", or by the ratio of I₁₀ (as measured by ASTM D-1238 (N) conditions 190°C/10.0 kg) divided by I₂ has been found to influence thermal bonding of staple fiber. We find that resins having Q values above 4.5, or I₁₀/I₂ values above 7 have shown extreme utility in broadening the thermal bonding window of staple fibers made from linear polyethylene. (The "bonding window" is the temperature range over which staple fiber can be satisfactorily thermally bonded.) For example, a single linear ethylene polymer having a melt index of 17 grams/10 minutes, a density of 0.950g/cc and a Q value of from 4 to 4.5 has a thermal bonding window of 5°C. A discrete polymer blend of the present invention having a melt index of 17 grams/10 minutes, a density of 0.950 g/cc and a Q value of 5.75 to 6 has a thermal bonding window of 10°C. Thus staple fibers made from the polymer blends of the present invention have broader thermal bonding windows.

The normalized fabric tensile strength (per 2.54 cm width) of a thermally bonded web (fabric) is measured on 1-inch wide by 4-inch long (2.54 cm by 10.16 cm) samples by measuring conventionally the total breaking load, and then normalizing it to 1-ounce/yard² (about 33.9 gm/m²) and measured in grams. The tenacity of fibers is measured as "grams/denier".

Prior to our invention it has been found to be difficult to make fine denier staple fibers of linear ethylene polymer for conversion into carded thermally bonded webs, especially at the high production rates and broad thermal bonding windows normally desired in commercial operations, which result in fabrics having typically more than about 50 percent of the normalized fabric tensile strength of fabrics obtained for carded, thermally bonded polypropylene staple fiber at comparable MI's. Greater strength of thermally bonded linear ethylene polymer staple fiber, including LLDPE, is desirable in various products, such as, for example, diaper cover stock, medical garments and feminine hygiene products.

Since the formation of staple fibers includes such complex and varied operations as melt drawing, mechanical stretching, crimping, and cutting, the requirements for the polymer are rigorous. The first requirement of the polymer is to withstand the melt drawing of the spinneret extrudate to a filament size ranging from approximately 0.1 to 15 denier at commercially feasible throughputs, especially throughputs ranging from 0.1 to 0.67 grams/minute/hole (gm/min./hole). These throughput variations are dependent not only upon desired production rates, but also equipment design limitations (such as compact melt spinning as compared to conventional melt spinning). Subsequently, this resultant filament can be stretched at draw ratios ranging up to 6:1 to produce filament at the final desired fiber size, typically ranging from 0.5 to 6.0 denier.

After stretching (or drawing) the fiber to the appropriate denier size the fiber is usually crimped, via a stuffer box, air texturizer or other device, and then cut to the desired length. Crimping imparts a thermo-mechanical deformation to the fiber, causing it to have numerous bends and greater entanglement. These bends, or crimps, are useful when carding fiber in order to create some degree of web cohesion prior to bonding. Staple fiber, especially for non-woven applications is usually carded into a web prior to being bonded.

Typical bonding techniques include hydrodynamic entanglement (commonly referred to as spunlacing), chemical bonding, and most frequently, thermal bonding. Thermal bonding is typically accomplished by passing carded web through heated calender rolls, infrared oven, ultrasonic bonding device, or through-air bonder. Most frequently, thermal bonding of these carded webs is achieved via heated calender bonding. The technique used to differentiate these various linear ethylene polymers will be described farther on in this disclosure, but it employs essentially all of these processing steps.

We have found that the initial requirement of good melt draw-down of the filaments into small diameter fibers under the desired production conditions makes staple fiber spinning with a relatively high molecular weight linear ethylene polymer very difficult. While it is already realized that increasing molecular weight of a polymer results in an increased strength (tenacity) of articles formed from that polymer, the increased molecular weight also results in much greater staple spinning problems. That is, the higher molecular weight linear ethylene polymers (including LLDPE) are not well suited for spinning at commercially viable and economical rates. What has not been known is that there are unexpected benefits obtained by blending a low molecular weight linear ethylene polymer especially LLDPE, with a high molecular weight linear ethylene polymer, especially LLDPE, especially in spinning, then carding and bonding staple fiber made from these polymers.

For purposes of describing the present invention, a linear ethylene polymer, (including HDPE and LLDPE) having a MI value of less than 25, preferably less than 20, especially less than 5, and, optionally, as low as 0.1, is considered to be in the high molecular weight range; the lower the MI value, the higher is the molecular weight. Linear ethylene polymer having a MI value in the range of 25-40 may, in some aspects, be considered to be an "intermediate" molecular weight range, but in relating the present invention, it is considered as being on the "high" end of the low molecular weight range. Linear ethylene polymer having a MI in the range above 40, especially above 45, is considered to be in the low molecular weight range and is not considered (in relating the present invention) to be in an "intermediate" molecular weight range. Whereas MI values exceeding 300 can be used as the low molecular weight polymer, especially if the high molecular weight portion of the present blend has a MI value below 1 or 2, it is preferred that the MI values of the low molecular weight polymer be not more than 600, preferably not more than 500. Above 500-600 MI, one might encounter problems such as diminished melt strength properties. In a general sense, one should consider that the lower the MI value of the high molecular weight resin, the greater the need to blend it with an off-setting amount of a linear ethylene polymer having a high MI value as the low molecular weight polymer.

One can calculate the MI values and the density values of the polymers used in the blends of the present invention and obtain values which are reasonably close to the actual values obtained by actual measurement of the blend.

The following formula may be used to calculate the melt index of polymer blends:$\text{ln blend = (fraction A)ln A + (fraction B) ln B}$ The following formula may be used to calculate the density of polymer blends:$\text{ρblend = (fraction A)ρA + (fraction B)ρB}$ The present invention employs, in a blend, an amount of low molecular weight linear ethylene polymer which is effective in overcoming the deficiencies of high molecular weight linear ethylene polymer in the making of staple fiber based webs or fabrics and enables one to utilize the high molecular weight linear ethylene polymer in the demanding processing conditions of staple fiber spinning, carding and bonding, while substantially maintaining the inherent strength of the high molecular weight linear ethylene polymer. This strength, when evaluated in bonded fabric form, improves by as much as 165 percent or more at a comparable MI's. The strengths of thermally bonded fabric made from these higher molecular weight blended polymers, approach the strength of typical commercial polypropylene-based fabrics by as much as 75 percent or more.

The thermally bonded webs or fabrics prepared using the blends of the present invention can be made wettable by incorporating into one or both of the polymers certain additives such as in U.S. 4,578,414. Furthermore, the addition of minor amounts of additives, such as colorants and pigments is within the purview of the present invention.

The webs or fabrics made using the present blends exhibit excellent softness, good gamma irradiation stability, high strength, and good thermal bondability to itself and to other thermoplastic films or webs, such as other polyolefins.

The ratio of high molecular weight linear ethylene polymer to low molecular weight linear ethylene polymer in the blend is largely dependent on the MI of each. Generally, the amount of low molecular weight polymer used in modifying the high molecular weight polymer is desirably about the minimum amount needed to render the high molecular weight polymer processable at the desired spinning rate and denier size and to improve thermal bonding strength of fabrics made therefrom. Conversely, the amount of high molecular weight polymer added to the low molecular weight polymer is desirably an amount needed to render the low molecular polymer processable at the desired spinning rate and denier size and to improve thermal bonding strength of fabrics made therefrom.

It is obvious that "trial and error" and "successive approximation" techniques can be used to determine the particular "weight ratios of the unblended components" that are needed in order to make a blended polymer having a Q value of at least 4.5 and/or an I₁₀/I₂ value of at least 7. Further, it is obvious that, if so desired, the polymer may be formed from more than two unblended components.

The examples hereinafter illustrate some embodiments of the present invention.

It should be noted that in all the following examples the molecular weights were determined on a Water's Associates Model No. 150C GPC. The measurements were made by dissolving polymer samples in hot, filtered, 1, 2, 4 trichlorobenzene (TCB). The GPC (Gel Permeation Chromatography) runs were made at 140°C in TCB. A flow rate of 1.0 ml/min was used and the columns used were 3 Polymer Laboratories 10 micron linear columns. Column performance was typically around 30,000 plates/meter (see Yau, W. W., J. J. Kirkland, D. D. Bly and H. J. Stoklosa, Journal of Liquid Chromatography, 125, 219 (1976)) as determined using 0.02 grams eicosane in 50 milliliters of TCB. Columns were disposed of if the plate count was below 20,000 plates per meter. Column performance was also monitored using the multiplied product of the spreading factor "σ" and the slope of the calibration curve "D" (see Yau, W. W., J. J. Kirkland, D. D. Bly and H. J. Stoklosa, Journal of Liquid Chromatography, 125, 219 (1976)). This value was typically around 0.081. Columns with values above 0.09 for Dσ were not employed. The antioxidant butylated hydroxytoluene was added at a concentration of 250 parts per million to the TCB. The system was calibrated using narrow molecular weight polystyrene standards. The following formula (see Williams, T. and I. M. Ward, J. Polymer Sci, Polymer Letters, 6, 621 (1968)) was used to transform polystyrene molecular weights to polyethylene molecular weights:$\text{Mw polyethylene = 0.4316 (Mw polystyrene)}$ The polyethylene samples were prepared at a concentration of 0.25 grams of polyethylene in 50 milliliters of TCB. The volume injected was 100 microliters.

### Example I

A discrete polymer blend comprising 40% by weight high molecular weight linear ethylene polymer (ethylene/octene, 2.3 MI, 0.917 g/cm³) and 60% low molecular weight linear polyethylene (ethylene/octene, 105 MI, 0.953 g/cm³), a blended density of 0.939 g/cm³, a blended MI of 23, and a Q-value of about 6.82 is formed into fiber at about 0.4 g/min./hole and 1,200 meters/minute haul-off speed and collected on spool. These filaments had average d.p.f of about 3.0. The spooled yarn was then unwound and conventionally cut into 1.5 inch (3.81 cm) staple fibers. Fabric made from the resulting fiber has a maximum 1" (2.54 cm) normalized fabric strip tensile strength at 2686 grams, which is more than 55% of commercially available fiber-grade polypropylene and over 140% of a single commercially available polyethylene at a comparable MI. Data are shown in Table I (shown after Example III).

A test on the above polymer blend is performed as follows: A one inch diameter extruder, 24 inches in length, containing a high shear type screw was used to melt and convey polymer to a positive displacement gear pump, which accurately metered polymer to the spin pack. Many different screw designs may be used, including one commonly used in the extrusion industry for polyethylene, i.e., the low shear or barrier type screw. Spin pick configuration may vary considerably, but that used in tests described herein had, as its major components, a 40 micron sintered metal filter media and a spinneret which had hole size of 600 microns, with length-to-diameter ratio of 4:1. Fibers are collected continuously onto spools using godet speeds necessary to achieve the desired denier per filament (dpf), relative to the throughput. For example, a throughput of about 0.4 gms/min./hole requires a corresponding 6 inch (15.24 cm) diameter godet speed of about 2600 revolutions per minute to achieve about 3.0 dpf. at 1,200 meters/minute. For all the tests herein, fibers were melt spun with no additional drawing. After collection of sufficient sample size, the fibers are cut off of the collection spool and cut into 1.5-inch (3.81 cm) staple fibers. Samples of these staple fibers (each 1.25 gm) are weighed out and formed into slivers using a Roto Ring (manufactured by Spinlab, Inc.); a sliver is an ordered collection of fibers such that the fiber ends are randomized while the fibers themselves are all paralleled. The structure is about 10 cm wide by about 25.4 cm long after gently opening the sliver tow. This opened sliver tow (simulating a carded web) is then fed into a Beloit Wheeler calender bonder for thermal tie down of the filaments where pressure and temperature are adjusted for optimal bonding conditions and fabric strength.

The fibers produced from the blend described above are found to have optimum bonding conditions at a top roll (or embossed roll with about 20 percent land area) temperature of about 115°C and a bottom roll (smooth roll) temperature of about 118°C. The bonding pressure is typically found to be optimal at about 700 psig (4927.9 kPa) or about 199 pli (pounds per linear inch) (90.3 kgs/linear 2.54 cm or 35.6 kgs/linear cm). After forming a sufficient number of thermally bonded fabrics under the same bonding conditions, a single sample is cut out of each bonded strip which measures one inch by four inches (2.54. by 10.16 cm), with the four inch dimension cut such that it is in the machine direction. These samples are individually weighed and then tensiled by use of an Instron tensile tester affixed with a data systems adapter for measuring and recording load and displacement. The fabric samples are loaded into the Instron such that the one inch section of each sample is held by the Instron jaws during the test, thus pulling the fabric in the machine direction. The mean value of the force required to break this fabric strip, normalized to one ounce per square yard weight for every test described herein, is then recorded. For this particular example, the normalized fabric tensile strength (or bonded fabric tenacity) is about 2686 grams.

The above procedure is also carried out for Examples II-XIII.

### Example II (for comparison; not example of invention)

A commercially available LLDPE, ethylene/octene copolymer, having a MI of 26, a density of 0.940 g/cm³, and a Q-value of 3.74 is formed into fiber at about 0.4 g/min./hole. Fabric made from the fibers has a maximum 1" (2.54 cm) normalized fabric tensile strength of 1855 g-to-break which is less than 40% of commercially available fiber-grade polypropylene. Data are shown in Table I.

### Example III

A blend comprising 50 percent by weight of low molecular weight linear ethylene polymer (ethylene/octene, 52 MI, 0.953 density) and 50 percent by weight of high molecular weight linear ethylene polymer (ethylene/octene, 12 MI, 0.936 density) is found to have a peak normalized fabric tensile strength of about 2400 gms. Blend MI is 25 and blend density is 0.945 g/cm³. See Table I below.

**TABLE I**

| Example | Type | MI | Density | Q-value | Normalized Fabric Tensile Strength, (grams) |
|---|---|---|---|---|---|
| I | discrete blend | 23 | 0.939 | 6.82 | 2686 |
| II | LLDPE, single | 26 | 0.940 | 3.74 | 1855 |
| III | discrete blend | 25 | 0.945 | **NM******* | 2400 |

| | | | | | |
|---|---|---|---|---|---|
| ***NM**=not measured | | | | | |

### Example IV (for comparison; not example of invention)

A commercially available LLDPE, ethylene/octene copolymer, having a MI of 12, a density of 0.935 g/cm³, and a Q-value of 4.36 is formed into fiber at about 0.4 g/min./hole. Fabric made from the resulting fiber has a maximum 1" (2.54 cm) normalized fabric tensile strength of about 2700 grams-to-break which is less than 60% of commercially available fiber grade polypropylene. Data are shown in Table II.

### Example V

An in-situ polymerized reactor blend (ethylene/octene copolymer) having a blended MI of 11, a blended density of 0.934 g/cm³, and a Q-value of 13.6 is formed into a fiber at about 0.4 g/min./hole. Fabric made from the resulting fiber has a maximum 1" (2.54 cm) normalized fabric tensile strength of about 3700 grams which is about 80% of commercially available fiber-grade polypropylene and about 140% of commercially available single linear ethylene polymer at a comparable MI. Data are shown in Table II.

**TABLE II**

| Example | Type | MI | Density | Q-value | Normalized Fabric Tensile Strength (grams) |
|---|---|---|---|---|---|
| IV | LLDPE, single | 12 | 0.935 | 4.36 | 2700 |
| V | reactor blend | 11 | 0.934 | 13.6 | 3700 |

### Example VI

An in-situ polymerized reactor blend (ethylene/octene copolymer)having a blended MI of 10, a blended density of 0.955 gm/cm³ and a Q-value of 8.87 is formed into a fiber at a throughput of about 0.4 gm/min./hole. Fabric samples of 1" (2.54 cm) made from the resulting fiber has a maximum normalized fabric tensile strength of about 3614 grams which is about 78% of that of commercially available fiber grade polypropylene and 129% of commercially available single linear ethylene polymer at a comparable MI (see Example VII for comparison). The following data indicates tenacity and bonding temperature for 6 tests. Also, some data are shown in Table III.

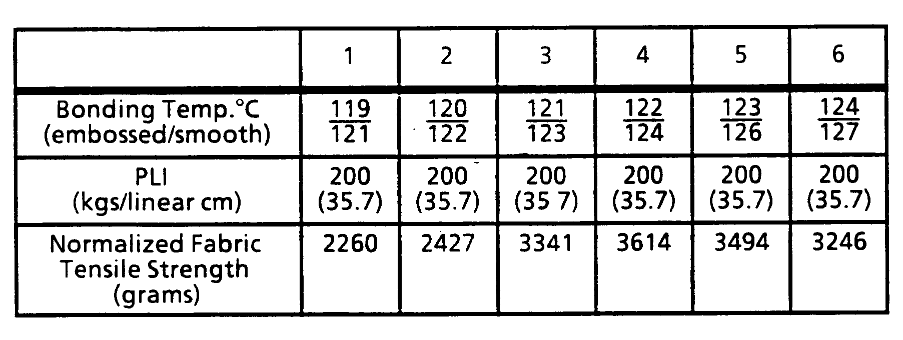

### Example VII (for comparison: not example of Invention)

A commercially available high density single linear, ethylene/propylene copolymer, having a MI of 12, a density of 0.95 gm/cm³, and a Q value of 3.92 is formed into fiber at about 0.4 gm/min./hole. Fabric made from the resulting fiber has a maximum 1" (2.54 cm) normalized fabric tensile strength of about 2794 grams-to-break which is less than 60% of commercially available fiber grade polypropylene. The following chart of data indicates normalized fabric tensile strength and bonding temperature for 4 tests. Also see Table III.

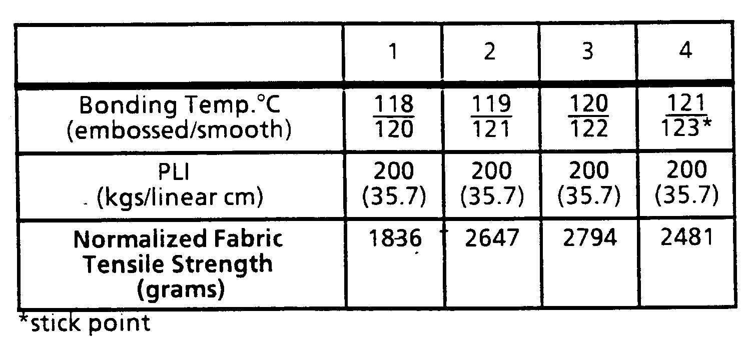

**TABLE III**

| Example | Type | MI | Density | Q-value | Normalized Fabric Tensile Strength (grams) |
|---|---|---|---|---|---|
| VI | reactor blend | 10 | 0.955 | 8.87 | 3614 |
| VII | sole linear PE | 12 | 0.950 | 3.92 | 2794 |

### Example VIII (for comparison; not claimed invention)

A commercially available fiber-grade polypropylene (PP) is spun into fibers and made into a heat-bonded fabric. The PP had a 15.6 MI (@190°C) and 0.91 density. The following data indicates normalized fabric tensile strength and temperature for 5 tests:

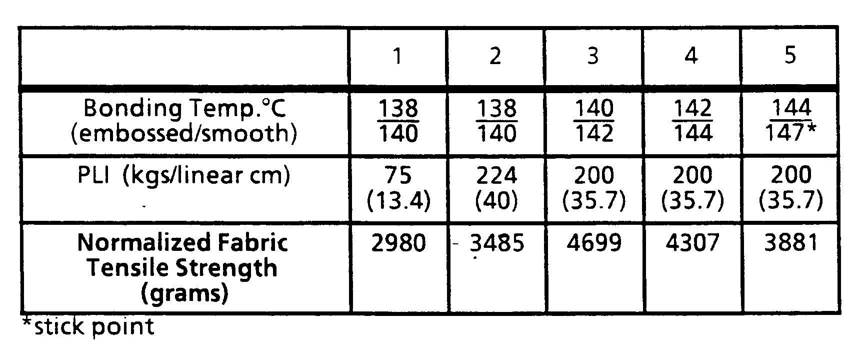

### Example IX

A discrete blend comprising 50 percent by weight of high molecular weight linear ethylene polymer (ethylene/octene, 12 MI, 0.935 density) and 50 percent by weight of low molecular weight linear ethylene polymer (ethylene/octene, 105 MI, 0.953 density) is spun into fibers and a bonded web (fabric) is obtained. The blend has a calculated MI of 35.5 and density of 0.944. Bonding temperature and normalized fabric tensile strength is shown below at different bonding pressures. Also see Table IV.

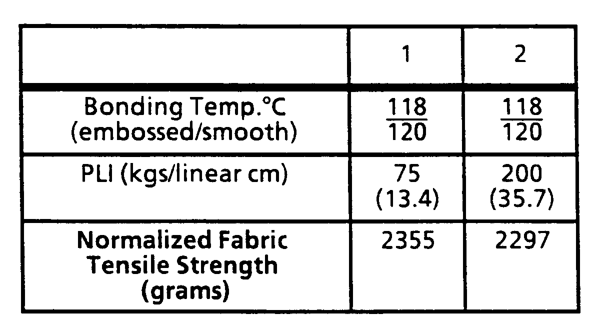

### Example X

A discrete blend comprising 70 percent by weight of high molecular weight linear ethylene polymer (ethylene/octene, 18 MI, 0.93 density) and 30 percent by weight of low molecular weight linear ethylene polymer (ethylene/octene, 105 MI, 0.953 density) and having a calculated MI of 30.5 and density of 0.937, is spun into fibers and bonded as a fabric in 3 tests; data are shown below. Also see Table IV.

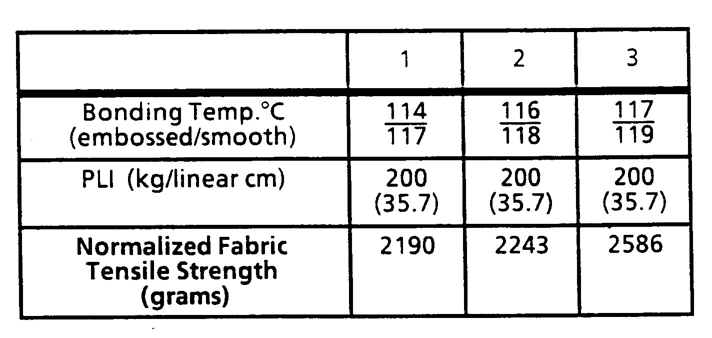

### Example XI (for comparison; not claimed invention)

A single linear ethylene polymer (ethylene/octene) having a MI of 30 and a density of 0.94 g/cm³ is found to have a maximum normalized fabric tensile strength of about 1531 gms. See Table IV below.

**TABLE IV**

| Example | Type | MI | Density | Normalized Fabric Tensile Strength (grams) |
|---|---|---|---|---|
| IX | discrete blend | 35.5 | 0.944 | 2355 |
| X | discrete blend | 30.5 | 0.937 | 2586 |
| XI | LLDPE, single | 30 | 0.94 | 1531 |

### Example XII

A discrete blend comprising 71% by weight of a high molecular weight linear ethylene polymer (ethylene/propylene, 8 MI, 0.952 density) and 29% by weight of low molecular weight linear ethylene polymer (ethylene/octene, 105 MI, 0.954 density) and having a calculated MI of 17 and density of 0.953 g/cm³ is spun into staple fibers and bonded into fabric at 200 PLI (35.7 kg/linear cm). Data are shown below. Also see Table V below.

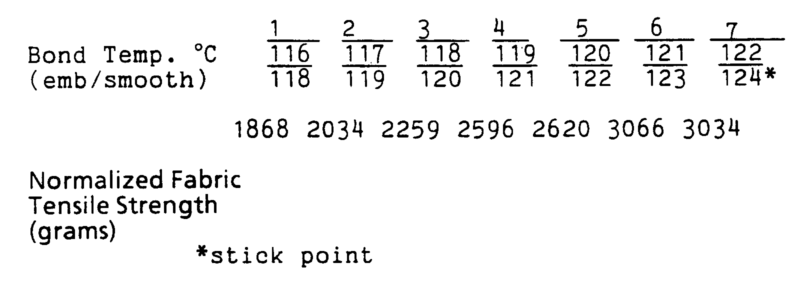

### Example XIII (for comparison; not claimed invention)

A single linear ethylene polymer (ethylene/propylene copolymer) having a MI of 17 and a density of 0.95 g/cm³ is spun into fibers and bonded as a fabric at 200 PLI (35.7 kg/linear cm). Data are shown below. Also see Table V below.

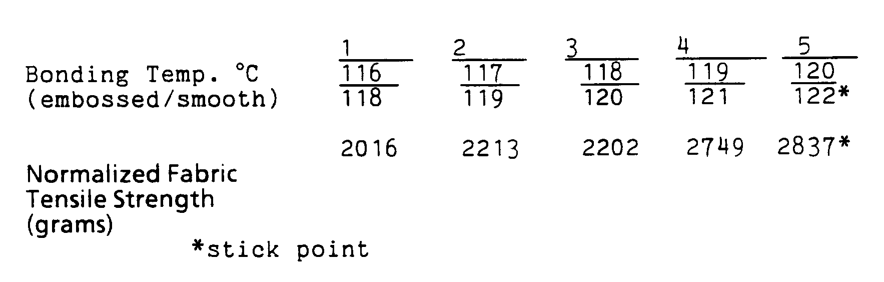

**TABLE V**

| Example | Type | MI | Density | Normalized Fabric Tensile Strength (grams) |
|---|---|---|---|---|
| XII | discrete blend | 17 | 0.953 | 3066 |
| XIII | sole linear PE | 17 | 0.95 | 2749 |

Finally, the following is a hindsight partial explanation as to how our claimed invention results in superior products, notwithstanding the strongly negative teachings of the prior art.

Continuous fiber (and subsequently the thermally bonded fabric) made using the spunbonded process differs dramatically from staple fiber spinning, optionally drawing the fiber, crimping the fiber, cutting the fiber making it discontinuous, carding the fiber into fabric and thermally bonding the fiber.

The spunbonded process can effectively use polyethylene having lower densities (such as about 0.94 g/cc and lower) and the continuous filaments are thermally bonded into fabric. Spunbonding of polymer results in fiber which simulates the shrinkage properties of low draw ratio staple fiber. The thermal bonding window of lower density polyethylene is broader than for higher density polyethylene at equivalent melt indices and molecular weight distributions and the thermal calenders are operated such that the fabric can be bonded. There is no carding step and thus no need to modify the polymer for forming the fiber into fabric.

In the staple process, the discontinuous or cut fiber has to be carded into fabric. Carding can be accomplished with polyethylene fiber by using a high draw ratio during the spinning step. But, this high draw ratio results in fiber having high shrinkage and resultant low thermally bonded fabric strength. The heat shrinks the fiber instead of bonding it together. However, the density of the polyethylene can be increased to enable it to card, but then the melting point range of the fiber is too narrow to effectively thermally bond it into fabric. Trying to control a thermal calender within a narrow range either results in an unbonded fabric or fiber/fabric sticking to the calender rolls resulting in equipment shutdown.

The present invention solves these staple fiber and fabric forming deficiencies by broadening the thermal bonding window of the polyethylene staple fiber making it useful in forming high strength thermally bonded fabric while maintaining the cardability of the fiber, especially when higher density polyethylene is used, such as densities between 0.94 and 0.965 g/cc.

## Claims

1. A process for preparing a fabric, which fabric is either thermally bonded or bondable, from filaments including thermoplastic fine denier discontinuous staple fibers having an average denier per filament (d.p.f.) in a range of from 0.1 to 15 d.p.f., and having filament lengths up to 30 cm, and in which the staple fibers are prepared from a meltspun blend of linear ethylene polymers, characterized in that the polymer blend in the staple fibers has a Q value above 4.5, wherein Q is defined as weight average molecular weight divided by number average molecular weight, as determined by gel permeation chromatography, and/or an I₁₀/I₂ value of at least 7, wherein I₁₀ is determined by ASTM D-1238(N) conditions, and I₂ is determined by ASTM D-1238(E) conditions.

2. The process of claim 1 wherein an unbonded fabric prepared thereby is capable of being thermally bonded to give a stronger fabric, as determined by normalized strip tensile strength, over a broader range of thermal bonding temperatures, than an otherwise identical process used to prepare a comparative product wherein the polymer blend in the staple fibers in the comparative product has either a Q value in a range of from 3.5 to 4.0 or an I₁₀/I₂ value in a range from 6.0 to 6.5.

3. The process of claim 1 wherein the polymeric blend in the staple fibers has a Q value in a range from 5.5 to 10.

4. The process of claim 1 wherein the polymeric blend in the staple fibers has an I₁₀/I₂ value in the range from 10 to 20.

5. Thermally bonded fabric prepared by the process of claim 1, wherein the thermally bonded fabric has a normalized strip tensile strength of at least 3,000 grams.

6. The thermally bonded fabric of claim 5 wherein the polymeric blend is an in-situ blend formed during polymerization of the polymer; and the thermally bonded fabric has a normalized strip tensile strength of at least 3,600 grams.

7. The thermally bonded fabric of claim 6 having a normalized strip strength of at least 3,700 grams.

8. Polymeric fibers including discontinuous staple fibers suitable for use in the process of claim 1, wherein the polymer has an I₁₀/I₂ value of at least 7 and the polymer is a blend of
(A) at least one high molecular weight linear ethylene polymer having a MI value less than 25 grams/10 minutes and a density above 0.91 grams/cm³, and
(B) at least one low molecular weight linear ethylene poplymer having a MI above 25 grams/10 minutes and a density above 0.91 grams/cm³.

9. Staple fiber having a broad thermal bonding window prepared from molten linear ethylene polymer, wherein said polymer is meltspun at commercially feasible throughput rates, optionally followed by mechanical drawing, to produce fiber sizes of from 0.1 to 15 denier/filament, said polymer characterized as a blend of linear polyethylenes comprising
(A) at least one high molecular weight linear ethylene polymer having an MI measured in accordance with ASTM D-1238(E) (190°C/2.16 kg) less than 25 g/10 minutes and a density above 0.91 g/cm³, and
(B) at least one low molecular weight linear ethylene polymer having an MI measured in accordance with ASTM D-1238(E) (190°C/2.16 kg) greater than 25 g/10 minutes and a density above 0.91 g/cm³ forming linear ethylene polymer staple fibers having a Q value above 4.5, wherein Q is defined as weight average molecular weight divided by number average molecular weight, as determined by gel permeation chromatography.

10. The staple fiber of claim 9, having an average denier per filament in a range of from 0.1 to 15 d.p.f. and being a homofilament.

11. A process for preparing the polymeric staple fibers of claim 8, characterized by the steps of
(A) melt spinning the polymer as described in claim 9 into meltspun filaments;
(B) hauling off the meltspun filaments at a speed in a range of from 60 to 2,000 meters/minute; and, optionally;
(C) drawing and/or crimping and/or cutting the hauled-off meltspun filaments by conventional means.

12. A method of increasing the thermal bonding window of staple fibers made from linear polyethylene, characterized by blending high and low molecular weight linear polyethylenes to form a blend having a Q value above 4.5, wherein Q is defined as weight average molecular weight divided by number average molecular weight, as determined by gel permeation chromatography and I₁₀/I₂ value above 7, wherein I₁₀ is determined by ASTM D-1238(N) and I₂ is determined by ASTM D-1238(E) conditions, spinning into staple fiber and thermally bonding into fabric.

13. The method of claim 12 wherein the high and low molecular weight linear polyethylene blend has a I₁₀/I₂ value above 7.

14. The method of claim 12 wherein the staple fiber has a thermal bonding window of 10°C.

15. The method of claim 12 wherein the staple fiber has an average denier per filament in a range from 1 to 15 denier per filament.

16. The method of claim 12 wherein the high molecular weight linear polyethylene is HDPE and the low molecular weight linear polyethylene is HDPE.

17. The method of claim 16 further characterized by carding the staple fiber into fabric before thermal bonding.

## Patentansprüche

1. Verfahren zur Herstellung eines Gewebes, wobei dieses Gewebe entweder warmegebunden oder wärmeverbindbar ist, aus Fäden, welche thermoplastische diskontinuierliche Stapelfasern mit feiner Denierzahl mit einer Durchschnitts-Denierzahl pro Faden (d.p.f.) in einem Bereich von 0,1 bis 15 d.p.f. und mit einer Fadenlänge bis zu 30 cm einschließen, und wobei die Stapelfasern aus einer schmelzgesponnenen Mischung aus linearen Polyethylenpolymeren hergestellt sind, dadurch gekennzeichnet, daß die Polymermischung in den Stapelfasern einen Q-Wert oberhalb 4,5, wobei Q als das Gewichtsdurchschnittsmolekulargewicht dividiert durch das Zahlendurchschnittsmolekulargewicht, bestimmt durch Gelpermeationschromatographie, definiert ist, und/oder einen I₁₀/I₂-Wert von wenigstens 7, worin I₁₀ unter Bedingungen der Norm ASTM D-1238(N) bestimmt ist und I₂ unter Bedingungen der Norm ASTM D-1238(E) bestimmt ist, aufweist.

2. Verfahren nach Anspruch 1, worin ein hiernach hergestelltes nichtgebundenes Gewebe fähig ist, durch Wärme gebunden zu werden, um ein festeres Gewebe, bestimmt durch normalisierte Streifenzugfestigkeit, über einem breiteren Bereich von Temperaturen zur Wärmeverbindung als ein ansonsten zur Herstellung eines Vergleichsproduktes angewandtes identisches Verfahren zu ergeben, worin die Polymerenmischung in den Stapelfasern in dem Vergleichsprodukt entweder einen Q-Wert in einem Bereich von 3,5 bis 4,0 oder einen I₁₀/I₂-Wert in einem Bereich von 6,0 bis 6,5 aufweist.

3. Verfahren nach Anspruch 1, worin die Polymerenmischung in den Stapelfasern einen Q-Wert in einem Bereich von 5,5 bis 10 hat.

4. Verfahren nach Anspruch 1, worin die Polymerenmischung in den Stapelfasern einen Q-Wert in einem Bereich von 10 bis 20 hat.

5. Wärmegebundenes Gewebe, hergestellt nach dem Verfahren von Anspruch 1, worin das wärmegebundene Gewebe eine normalisierte Streifenzugfestigkeit von wenigstens 3.000 Gramm hat.

6. Wärmegebundenes Gewebe nach Anspruch 5, worin die Polymerenmischung eine in situ während der Polymerisation des Polymeren gebildete Mischung ist und das wärmegebundene Gewebe eine normalisierte Streifenzugfestigkeit von wenigstens 3.600 Gramm hat.

7. Wärmegebundenes Gewebe nach Anspruch 6, worin das wärmegebundene Gewebe eine normalisierte Streifenzugfestigkeit von wenigstens 3.700 Gramm hat.

8. Polymerfasern, welche diskontinuierliche Stapelfasern enthalten und zur Anwendung in dem Verfahren nach Anspruch 1 brauchbar sind, worin das Polymere einen I₁₀/I₂-Wert von wenigstens 7 hat und das Polymere eine Mischung ist von:
(A) wenigstens einem linearen Ethylenpolymeren mit hohem Molekulargewicht, das einen MI-Wert von weniger als 25 Gramm/10 Minuten und eine Dichte oberhalb 0,91 Gramm/cm³ hat, und
(B) wenigstens einem linearen Ethylenpolymeren mit niedrigem Molekulargewicht, das einen MI-Wert oberhalb 25 Gramm/10 Minuten und eine Dichte oberhalb 0,91 Gramm/cm³ hat.

9. Stapelfasern mit einem breiten Fenster zum Wärmeverbinden, hergestellt aus geschmolzenem linearem Ethylenpolymerem, worin dieses Polymere mit kommerziell annehmbaren Durchsatzraten, wahlweise mit nachfolgendem mechanischem Ziehen, zur Herstellung von Fadengrößen von 0,1 bis 15 Denier/Einzelfaden schmelzgesponnen ist, wobei dieses Polymere als eine Mischung von linearen Polyethylenen gekennzeichnet ist, umfassend
(A) wenigstens ein lineares Ethylenpolymeres mit hohem Molekulargewicht, das einen MI-Wert, gemessen nach der Norm ASTM D-1238(E) (190° C/2,16 kg), von weniger als 25 g/10 Minuten und eine Dichte oberhalb 0,91 g/cm³ hat, und
(B) wenigstens ein lineares Ethylenpolymeres mit niedrigem Molekulargewicht, das einen MI-Wert, gemessen nach der Norm ASTM 1238(E) (190° C/2,16 kg), größer als 25 g/10 Minuten und eine Dichte oberhalb 0,91 g/cm³ hat, die Stapelfasern aus linearen Ethylenpolymeren bilden, welche einen Q-Wert oberhalb 4,5 haben, wobei Q als das Gewichtsdurchschnittsmolekulargewicht dividiert durch das Zahlendurchschnittsmolekulargewicht, bestimmt durch Gelpermeationschromatographie, definiert ist.

10. Stapelfasern nach Anspruch 9, welche eine Durchschnitts-Denierzahl pro Einzelfaden im Bereich von 0,1 bis 15 d.p.f. haben und ein Homofaden sind.

11. Verfahren zur Herstellung der polymeren Stapelfasern von Anspruch 8, gekennzeichnet durch die Stufen von:
(A) Schmelzspinnen des in Anspruch 9 angegebenen Polymeren zu schmelzgesponnener Einzelfäden;
(B) Abziehen der schmelzgesponnenen Einzelfäden mit einer Geschwindigkeit in einem Bereich von 60 bis 2.000 Meter/Minute; und wahlweise
(C) Ziehen und/oder Kräuseln und/oder Schneiden der abgezogenen schmelzgesponnenen Einzelfäden mittels konventioneller Mittel.

12. Verfahren zur Erhöhung des Fensters der Wärmeverbindung von aus linearem Polyethylen hergestellten Stapelfasern, gekennzeichnet durch das Mischen linearer Polyethylene mit hohem und niedrigem Molekulargewicht zur Bildung einer Mischung mit einem Q-Wert oberhalb 4,5, wobei Q als das Gewichtsdurchschnittsmolekulargewicht dividiert durch das Zahlendurchschnittsmolekulargewicht, bestimmt durch Gelpermeationschromatographie, definiert ist, und einem I₁₀/I₂-Wert über 7, worin I₁₀ unter Bedingungen der Norm ASTM D-1238(N) bestimmt ist und I₂ unter Bedingungen der Norm ASTM D-1238(E) bestimmt ist, Verspinnen zu Stapelfasern und Wärmeverbinden zu Gewebe.

13. Verfahren nach Anspruch 12, worin die Mischung aus linearem Polyethylen mit hohem und niedrigem Molekulargewicht einen I₁₀/I₂-Wert oberhalb 7 besitzt.

14. Verfahren nach Anspruch 12, worin die Stapelfaser ein Fenster der Wärmeverbindung von 10° C besitzt.

15. Verfahren nach Anspruch 12, worin die Stapelfaser eine Durchschnitts-Denierzahl pro Einzelfaden im Bereich von 0,1 bis 15 Denier pro Einzelfaden besitzt.

16. Verfahren nach Anspruch 12, worin das lineare Polyethylen mit hohem Molekulargewicht HDPE ist und das lineare Polyethylen mit niedrigem Molekulargewicht HDPE ist.

17. Verfahren nach Anspruch 16, weiter gekennzeichnet durch Kardieren der Stapelfasern zu Gewebe vor der Wärmeverbindung.

## Revendications

1. Procédé pour préparer un tissu, ce tissu étant soit lié par voie thermique, soit apte à être lié par voie thermique, réalisé à partir de filaments comprenant des fibres thermoplastiques coupées, discontinues et de faible denier, présentant un denier moyen par filament (d.p.f) compris entre 0,1 et 15 d.p.f., et ayant des longueurs de filament allant jusqu'à 30 cm, et dans lequel on prépare les fibres coupées à partir d'un mélange de polymères linéaires d'éthylène, filé à l'état fondu, caractérisé en ce que le mélange de polymères des fibres coupées a une valeur Q supérieure à 4,5, Q étant défini comme étant la masse moléculaire moyenne en poids divisée par la masse moléculaire moyenne en nombre, comme déterminé par chromatographie par perméation sur gel, et/ou une valeur I₁₀/I₂ d'au moins 7, I₁₀ étant déterminé dans des conditions selon la norme ASTM D-1238 (N), et I₂ étant déterminé dans des conditions selon la norme ASTM D-1238(E).

2. Procédé selon la revendication 1, dans lequel un tissu non lié, préparé de cette manière, est apte à être lié par voie thermique pour donner un tissu plus solide, comme déterminé par une valeur normalisée de la résistance d'une bande à la traction, sur une plus large plage de températures de liaison thermique que dans le cas d'un procédé par ailleurs identique utilisé pour préparer un produit comparatif, dans lequel le mélange de polymères des fibres coupées dans le produit comparatif a, soit une valeur Q comprise entre 3,5 et 4,0, soit une valeur I_{10/}/I₂ comprise entre 6,0 et 6,5.

3. Procédé selon la revendication 1, dans lequel le mélange polymère des fibres coupées a une valeur Q comprise entre 5,5 et 10.

4. Procédé selon la revendication 1, dans lequel le mélange polymère des fibres coupées a une valeur I₁₀/I₂ comprise entre 10 et 20.

5. Tissu lié par voie thermique, préparé selon le procédé de la revendication 1, dans lequel le tissu lié par voie thermique a une valeur normalisée de la résistance à la traction d'au moins 3000 grammes.

6. Tissu lié par voie thermique selon la revendication 5, dans lequel le mélange polymère est un mélange formé in-situ pendant la polymérisation du polymère; et le tissu lié par voie thermique a une valeur normalisée de la résistance à la traction d'au moins 3600 grammes.

7. Tissu lié par voie thermique selon la revendication 6, ayant une valeur normalisée de la résistance d'une bande à la traction d'au moins 3700 grammes.

8. Fibres polymères comprenant des fibres coupées discontinues convenant pour une utilisation dans le procédé de la revendication 1, dans lequel le polymère a une valeur I₁₀/I₂ d'au moins 7 et le polymère est un mélange:
(A) d'au moins un polymère linéaire d'éthylène à haut poids moléculaire ayant une valeur de MI inférieure à 25 grammes/10 minutes et une masse spécifique supérieure à 0,91 gramme/cm³, et
(B) d'au moins un polymère linéaire d'éthylène à bas poids moléculaire ayant un MI supérieur à 25 grammes/10 minutes et une masse spécifique supérieure à 0,91 grammes/cm³.

9. Fibre coupée présentant une large fenêtre de liaison thermique, préparée à partir d'un polymère linéaire d'éthylène fondu, ledit polymère étant filé à l'état fondu à des vitesses de production possibles industriellement, ce filage étant suivi facultativement par un étirage mécanique de manière que soient obtenus des calibres de fibres compris entre 0,1 et 15 deniers/filament, ledit polymère étant caractérisé comme étant un mélange de polyéthylènes linéaires comprenant:
(A) au moins un polymère linéaire à haut poids moléculaire ayant un MI mesuré selon la norme ASTM D-1238(E) (190°C/2,16 kg) inférieur à 25g/10 minutes et une masse spécifique supérieure à 0,91 g/cm^{3,} et
(B) au moins un polymère linéaire d'éthylène à bas poids moléculaire ayant un MI mesuré selon ASTM D-1238(E) (190°C/2,16 kg) supérieur à 25 g/10 minutes et une masse spécifique supérieure à 0,91 g/cm³ et formant des fibres coupées de polymère linéaire d'éthylène ayant une valeur Q supérieure à 4,5, Q étant défini comme étant la masse moléculaire moyenne en poids divisée par la masse moléculaire moyenne en nombre, comme déterminé par chromatographie par perméation sur gel.

10. Fibre coupée selon la revendication 9, ayant un denier moyen par filament compris entre 0,1 et 15 d.p.f. et étant un homofilament.

11. Procédé pour préparer les fibres coupées polymères selon la revendication 8, caractérisé par les étapes consistant:
(A) à filer à l'état fondu le polymère selon la revendication 9 sous forme de filaments filés à l'état fondu;
(B) à extraire les filaments filés à l'état fondu à une vitesse comprise entre 60 et 2000 mètres/minute; et, facultativement;
(C) à étirer et/ou texturiser et/ou couper, à l'aide de moyens classiques, les filaments filés à l'état fondu et extraits.

12. Procédé pour augmenter la fenêtre de liaison thermique des fibres coupées formées à partir de polyéthylènes linéaires, caractérisé par le fait que l'on mélange des polyéthylènes à haut et à bas poids moléculaires pour former un mélange ayant une valeur Q supérieure à 4,5, Q étant défini comme étant la masse moléculaire moyenne en poids divisée par la masse moléculaire moyenne en nombre, comme déterminé par chromatographie par perméation sur gel, et une valeur I₁₀/I₂ supérieure à 7, I₁₀ étant déterminé dans des conditions selon la norme ASTM D 1238(N) et I₂ étant déterminé dans des conditions selon la norme ASTM D-1238(E), on file le mélange de manière à obtenir des fibres coupées, et on effectue la liaison par voie thermique de manière à obtenir un tissu.

13. Procédé selon la revendications 12, dans lequel le mélange de polyéthylènes linéaires à haut et bas poids moléculaires a une valeur I/₁₀/I₂ supérieure à 7.

14. Procédé selon la revendication 12, dans lequel la fibre coupée présente une fenêtre de liaison thermique de 10°C.

15. Procédé selon la revendication 12, dans lequel la fibre coupée a un denier moyen par filament compris entre 1 et 15 deniers par filament.

16. Procédé selon la revendication 12, dans lequel le polyéthylène linéaire à haut poids moléculaire est HDPE et le polyéthylène linéaire à bas poids moléculaire est HDPE.

17. Procédé selon la revendication 16, caractérisé, en outre, par le cardage de la fibre coupée avant la liaison thermique de manière que soit obtenu un tissu.
